Europäisches Patentamt

European Patent Office

Office européen des brevets

(19)

(11) Veröffentlichungsnummer : **0 197 884**
B1

(12) **EUROPÄISCHE PATENTSCHRIFT**

(45) Veröffentlichungstag der Patentschrift :
15.06.88

(21) Anmeldenummer : 86730029.5

(22) Anmeldetag : 21.02.86

(51) Int. Cl.⁴ : **B 01 D 53/36, B 01 J  8/00**

(54) Tragrostboden für einen Katalysatorkorb.

(30) Priorität : 29.03.85 DE 3512102

(43) Veröffentlichungstag der Anmeldung :
15.10.86 Patentblatt 86/42

(45) Bekanntmachung des Hinweises auf die Patenterteilung : 15.06.88 Patentblatt 88/24

(84) Benannte Vertragsstaaten :
AT BE CH DE FR GB IT LI LU NL SE

(56) Entgegenhaltungen :
FR-A- 2 313 969
FR-A- 2 395 463
US-A- 4 238 455

(73) Patentinhaber : MANNESMANN Aktiengesellschaft
Mannesmannufer 2
D-4000 Düsseldorf 1 (DE)

(72) Erfinder : Strobach, Karl
Saarnerstrasse 32
D-4100 Duisburg 29 (DE)

(74) Vertreter : Meissner, Peter E., Dipl.-Ing. et al
Meissner & Meissner Patentanwälte Herbertstrasse
22
D-1000 Berlin 33 Grunewald (DE)

EP 0 197 884 B1

**Beschreibung**

Die Erfindung betrifft einen Tragrostboden für einen Katalysatorkorb.

Zur Behandlung der Rauchgase in Kraftwerken, die mit fossilen Brennstoffen befeuert werden, sind eine Reihe von Verfahren entwickelt worden, so z. B. die katalytische Reduktion von Stickoxiden ($NO_x$). Die dafür benötigten Katalysatoren werden als stangenförmig ausgebildete Einzelemente zur Erleichterung des Transports und des Einbaus in den Reaktor, in dem die Rauchgase behandelt werden, in sogenannte Katalysatorkörbe eingesetzt und auf diese Weise gebündelt. Die Beladung des Reaktorraums und der Austausch unbrauchbarer Katalysatoren kann so sehr viel schneller erfolgen.

Die Katalysatorkörbe werden innerhalb des Reaktors in einer oder in mehreren Ebenen jeweils dicht aneinandergereiht, um den verfügbaren Raum möglichst vollständig mit dem eigentlichen Katalysatormaterial auszufüllen. Damit die Rauchgase die einzelnen Katalysatorelemente durchströmen können, muß der Boden eines Katalysatorkorbes entsprechend durchlässig, d. h. mit möglichst großer freier Durchtrittsfläche gestaltet sein. Andererseits muß gewährleistet sein, daß die Katalysatorelemente im Katalysatorkorb sicher gehalten werden und nicht nach unten herausfallen.

Zur Lösung dieses Problems ist es bekannt, den Boden des Katalysatorkorbes als Tragrostboden auszubilden, in dessen einzelne Felder die mit rechteckigem Querschnitt gestalteten Katalysatorelemente eingesetzt werden können. Gehalten werden die Katalysatorelemente formschlüssig durch entsprechende Vorsprünge an der Unterseite des Tragrostbodens, die jeweils in die Öffnung der einzelnen Felder hineinragen. Der Tragrostboden ist als Schweißkonstruktion aus einer Vielzahl von sich über die gesamte Breite des Katalysatorkorbes erstreckenden parallel angeordneten Längsblechen gebildet, zwischen denen jeweils (entsprechend der Größe der Einzelfelder) kurze Querbleche eingeschweißt sind.

Jedes Querblech ist also in jedem Feld durch entsprechende Längsnähte mit den das Feld begrenzenden Längsblechen verschweißt. Dadurch ist die Herstellung dieser Tragrostböden sehr aufwendig und hat den weiteren Nachteil, daß wegen der vielen Schweißnähte auch häufig starker Verzug auftritt.

Aufgabe der Erfindung ist es daher, einen Tragrostboden für einen Katalysatorkorb anzugeben, dessen Herstellung wesentlich vereinfacht ist und keinen Verzug in der Konstruktion mit sich bringt. Außerdem soll die Sicherung der Katalysatorelemente gegen ein Herausfallen möglichst einfach und platzsparend sein.

Gelöst wird diese Aufgabe erfindungsgemäß durch einen Tragrostboden mit den Merkmalen des Patentanspruchs 1 ; vorteilhafte Weiterbildungen der Erfindung sind in den Unteransprüchen 2-5 angegeben.

Anhand der nachfolgend beschriebenen Abbildungen wird die Erfindung näher erläutert. Es zeigen :

Fig. 1 einen Katalysatorkorb in perspektivischer Ansicht,

Fig. 2 eine Draufsicht auf einen Tragrostboden,

Fig. 3 eine Ansicht eines Längsbleches,

Fig. 4 eine Ansicht eines Querbleches,

Fig. 5 eine Ansicht eines Seitenbleches,

Fig. 6 eine Draufsicht auf ein Kreuzstück,

Fig. 7 einen Schnitt gemäß Linie C-C in Figur 6,

Fig. 8 eine Draufsicht auf die Einzelheit D gemäß Figur 2,

Fig. 9 einen Schnitt gemäß Linie E-E in Figur 8,

Fig. 10 einen Schnitt gemäß Linie F-F in Figur 9.

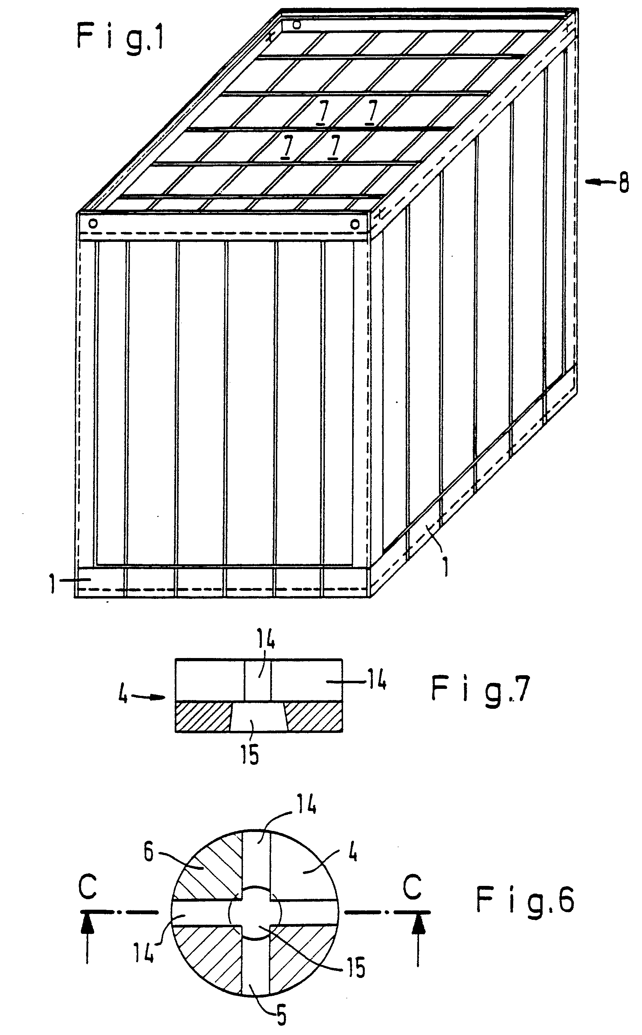

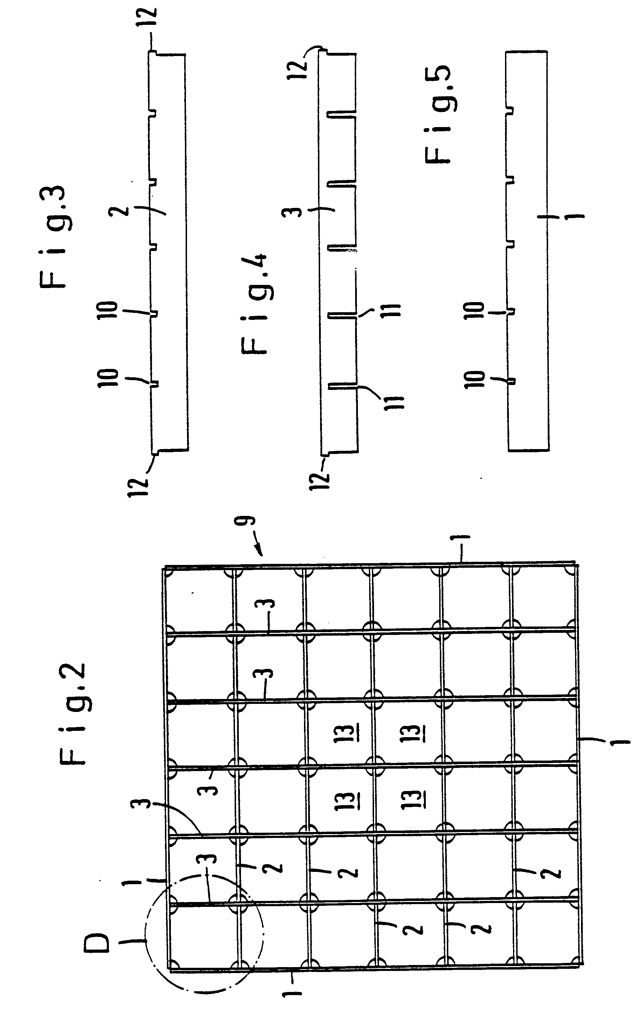

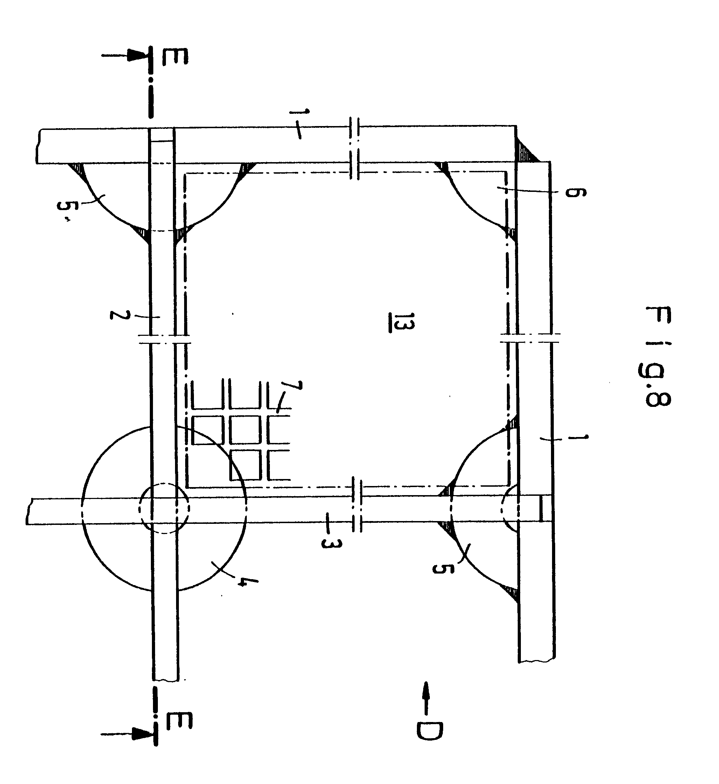

Die perspektivische Darstellung in Figur 1 zeigt einen rechteckigen mit im Querschnitt ebenfalls rechteckigen Katalysatorelementen 7 gefüllten Katalysatorkorb 8. Der Tragrostboden 9 des Katalysatorkorbs 8 ist in Figur 2 dargestellt. Dieser Tragrostboden 9 ist gebildet aus kreuzweise ineinandergesteckten Längsblechen 2 und Querblechen 3. Im Kreuzungsbereich weisen die Längs- und Querbleche 2, 3 zu diesem Zweck, wie aus Figur 3 und 4 hervorgeht, miteinander korrespondierende senkrecht von der Oberkante bzw. Unterkante ausgehende Längsschlitze 10 bzw. 11 auf, deren Breite der Dicke der Bleche 2, 3 entspricht. Die Schlitze 10, 11 haben zusammen genommen jeweils eine Länge, die mindestens so groß ist wie die Höhe der untereinander gleich breiten, im montierten Zustand auf einer Längsseite hochkant stehenden Bleche 2, 3. Daher schließen die Ober- und Unterkanten der Bleche 2, 3 jeweils in einer Ebene bündig ab. Die Schlitze 10 in den Längsblechen 2 werden vorzugsweise weniger tief ausgeführt als die Schlitze 11 in den Querblechen 3, so daß der tragende Querschnitt der Längsbleche 2 weniger stark geschwächt wird und diese im montierten Zustand die Hauptlast der Katalysatorbefüllung tragen können. Die Bleche 2, 3 weisen an ihren schmalen Stirnseiten in Höhe ihrer Oberkante jeweils eine Nase 12 auf. Diese Nasen 12 haben die gleiche Höhe wie die Längsschlitze 10 in den Seitenblechen 1 (Fig. 5), die den Tragrostboden 9 jeweils ringsum abschließen. Die Nasen 12 fassen dabei jeweils in einen der Längsschlitze 10 der Seitenbleche 1. Figur 2 zeigt, daß die Bleche 1, 2, 3 im zusammengebauten Zustand einen aus einer Vielzahl gleichgroßer, rechteckiger (hier quadratischer) Felder 13 bestehenden Tragrostboden 9 bilden, in die jeweils ein Katalysatorelement 7 eingesetzt werden kann (Fig. 1). Ein solches Feld ist als Einzelheit D in Figur 8 vergrößert dargestellt worden, wobei auch die Durchzugskanäle der Katalysatorelemente 7 angedeutet sind. Es sind auch die von der Unterseite des Tragrostbodens 9 im Kreuzungsbereich der Bleche 2, 3 aufgeschobenen Kreuzstücke 4 erkennbar. Die Gestalt eines solchen Kreuzstücks 4 ist in Figur 6 in der Draufsicht und in Figur 7 im Schnitt gemäß Linie C-C im einzelnen dargestellt.

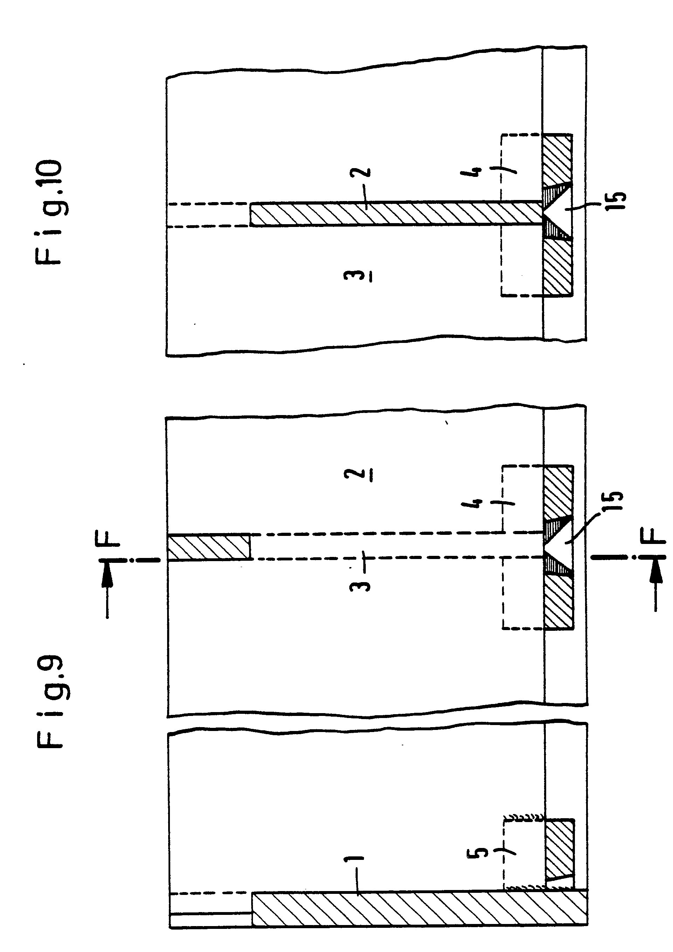

Das Kreuzstück 4 weist äußerlich im wesentlichen die Gestalt eines Kreiszylinders auf ; es wäre auch ohne weiteres ein prismatisch geformter Körper verwendbar. An seiner oberen Stirnseite weist das Kreuzstück 4 eine kreuzförmige Ausnehmung 14, d. h. zwei rechtwinklig zueinander verlaufende, sich im Zentrum der Zylinderfläche schneidende Längsnuten auf. Die Breite der Ausnehmung 14 entspricht der Dicke der Bleche 2, 3. Im Bereich der Zylinderachse ist das Kreuzstück 4 mit einer durchgehenden Öffnung 15 versehen, z. B. mit einer von unter angesetzten Bohrung, wobei diese vorzugsweise im Grund der Längsnuten 14 endet, so daß nach oben hin die Spitzen der zwischen den Längsnuten 14 stehen bleibenden Kreissektorflächen erhalten bleiben. Der Zweck der Kreuzstücke 4 ist aus dem Schnittbild Figur 9 (gemäß Linie E-E aus Figur 8) und aus dem Schnittbild Figur 10 (gemäß Linie F-F aus Figur 9) ersichtlich. Die Kreuzstücke 4 sichern die in die Felder eingesetzten Katalysatorelemente 7 formschlüssig gegen ein Herausfallen nach unten. Die besondere Wirkung dieser erfindungsgemäßen Lösung ist, daß mit einer einzigen Schweißnaht, die als Lochschweißung in die Öffnung 15 des Kreuzstücks 4 gelegt ist, nicht nur das Kreuzstück 4 selbst befestigt wird, sondern gleichzeitig auch die beiden Bleche 2, 3 im Kreuzungsbereich miteinander verschweißt sind. Das bedeutet gegenüber dem bereits geschilderten Stand der Technik eine erhebliche Einsparung an Schweißnähten. Wie aus Figur 2 und Figur 9 ersichtlich ist, besteht im Bereich der Verbindung eines Seitenbleches 1 mit einem Längs- oder Querblech 2, 3 keine Kreuzung von Blechen, sondern lediglich eine Stoßstelle. Aus diesem Grunde werden an diesen Stellen halbierte Kreuzstücke 5 angeschweißt, wie sie in Figur 6 in der unteren Bildhälfte durch Schraffur angedeutet sind. In diesen Fällen ist eine Lochschweißung in der Regel nicht ausreichend bzw. aus Platzgründen nicht sinnvoll durchführbar, so daß die Schweißung zweckmäßigerweise außen an dem halbierten Kreuzstück 5 erfolgt, wie in Figur 8 und Figur 9 dargestellt ist. Im Bereich der Stoßstelle zweier Seitenbleche 1, also im Eckbereich des Tragrostbodens 9 werden ganz entsprechend Viertelstücke eines Kreuzstückes 6 angeschweißt (Figur 8), wie sie durch Schraffur im linken oberen Sektor in Figur 4 kenntlich gemacht sind. Die Seitenbleche 1 sind außen zusätzlich durch eine Kehlnaht miteinander verschweißt.

Neben der bereits erwähnten erheblichen Einsparung an Schweißnähten zeichnet sich die erfindungsgemäße Lösung insbesondere noch dadurch aus, daß sie sich nicht infolge von Schweißspannungen verzieht, sondern mit hoher Maß- und Formgenauigkeit herstellbar ist. Zudem wird der freie Durchtrittsquerschnitt für die Rauchgase im Tragrostboden durch die als Sicherungsbleche für die Katalysatorelemente wirkenden Kreuzstücke nur wenig beeinträchtigt.

## Patentansprüche

1. Tragrostboden aus warmfestem Stahl für einen Katalysatorkorb, in dessen rechteckige offene Felder, die von kreuzweise angeordneten streifenförmigen und auf einer Blechkante aufstehenden Längs- und Querblechen gebildet sind, jeweils Katalysatorelemente einsetzbar sind, welche durch Vorsprünge an unteren Ende der Längs- und/oder Querbleche formschlüssig gehalten werden, dadurch gekennzeichnet, daß die Längs- (2) und Querbleche (3) jeweils im Kreuzungsbereich miteinander korrespondierende längliche Ausnehmungen (10, 11) in der Breite der Blechdicke aufweisen und mit diesen Ausnehmungen (10, 11) ineinandergesteckt sind, daß im Kreuzungsbereich zweier Längs- (2) und Querbleche (3) an der Unterseite des Tragrostbodens (9) jeweils ein Kreuzstück (4), das an der oberen Kopfseite eine dem Profil der gekreuzten Längs- (2) und Querbleche (3) entsprechende kreuzförmige Ausnehmung (14) aufweist, aufgeschoben ist und daß jedes Kreuzstück (4) eine durch des Zentrum der kreuzförmigen Ausnehmung (14) gehende Öffnung (15) aufweist, durch die hindurch mit einer Lochnaht das Kreuzstück (4) mit den beiden gekreuzten Längs- (2) und Querblechen (3) verschweißt ist.

2. Tragrostboden nach Anspruch 1, dadurch gekennzeichnet, daß die länglichen Ausnehmungen (10) in den Längsblechen (Tragstäbe) (2) weniger tief sind als die länglichen Ausnehmungen (11) in den Querblechen (3).

3. Tragrostboden nach Anspruch 1 oder 2, dadurch gekennzeichnet, daß die Kreuzstücke (4) eine im wesentlichen zylindrische Außenform aufweisen.

4. Tragrostboden nach Anspruch 3, dadurch gekennzeichnet, daß in den äußeren Randbereichen des Tragrostbodens (9) längs der Zylinderachse halbierte Kreuzstücke (5) angeschweißt sind.

5. Tragrostboden nach Anspruch 3 oder 4, dadurch gekennzeichnet, daß in den außenliegenden Ecken des Tragrostbodens (9) längs der Zylinderachse geviertelte Kreuzstücke (6) angeschweißt sind.

## Claims

1. Supporting gate plate for a catalyser cage, formed in high temperature steel and having rectangular open spaces for receiving catalyser elements, the spaces being formed by lamellar longitudinal and cross plates arranged crosswise and standing on a plate edge, and the bottom end of the longitudinal and/or cross plates, having projections for form-locking elements in the spaces characterised in that the longitudinal (2) and cross plates (3) each have elongated recesses (10, 11) in the breadth of the thickness of the plate which correspond to each other, and are fitted to each other by these recesses (10, 11) where they intersect, in that in each intersection area of two longitudinal (2) and cross plates (3), on the underside of the supporting gate plate (9) a crosspiece (4) is pushed up which has on the upper head end a cross-shaped recess (14) corresponding to the profile of the crossed longitudinal (2) and cross plates (3), and in that each crosspiece (4) has an opening (15) going through the centre of the cross-shaped recess (14) by which the crosspiece (4) is welded to the two crossed longitudinal (2) and cross plates (3) by a slotted seam.

2. Supporting gate plate according to Claim 1, characterised in that the elongate recesses (10) in the longitudinal plates (supporting members) (2) are less deep than the elongated recesses (11) in the cross plates (3).

3. Supporting gate plate according to Claim 1 or 2, characterised in that the crosspieces (4) have an essentially cylindrical outer shape.

4. Supporting gate plate according to Claim 3, characterised in that in the outer edge areas of the supporting gate plate (9) along the cylinder axis halved crosspieces (5) are welded on.

5. Supporting gate plate according to Claim 3 or 4, characterised in that in the outer corners of the supporting gate plate (9) quatered crosspieces (6) are welded on along the cylinder axis.

**Revendications**

1. Grille de support en acier résistant à la chaleur pour un panier à catalyseur dans les zones rectangulaires ouvertes de laquelle, qui sont formées par des tôles longitudinales et transversales en forme de bandes disposées en croix et dressées sur un bord de tôle, peuvent être disposés, à chaque fois, des éléments à catalyseur, lesquels sont maintenus de façon bloquée par des saillies aux extrémités inférieures des tôles longitudinales et/ou transversales, caractérisée en ce que les tôles longitudinales (2) et transversales (3) comportent, à chaque fois, dans la zone de croisement, des évidements longitudinaux correspondant l'un à l'autre (10, 11) dans l'épaisseur de tôle, et lesdites tôles sont enfichées l'une dans l'autre par ces évidements (10, 11), en ce que, dans la zone de croisement de deux tôles longitudinale (2) et transversale (3), sur le dessous de la grille de support (9) est prévue, à chaque fois, une pièce en croix (4), qui comporte, à son extrémité supérieure, un évidement (14) en croix correspondant au profil des tôles longitudinale (2) et transversale (3) croisées, et en ce que chaque pièce en croix (4) présente une ouverture (15) traversant le centre de l'évidement en croix (14), par laquelle, à l'aide d'une soudure en bouchon, la pièce en croix (4) est soudée aux deux tôles longitudinale (2) et transversale (3) croisées.

2. Grille de support selon la revendication 1, caractérisée en ce que les évidements longitudinaux (10) dans les tôles longitudinales (tôles de support) (2) sont moins profonds que les évidements longitudinaux (11) dans les tôles transversales (3).

3. Grille de support selon la revendication 1 ou 2, caractérisée en ce que les pièces en croix (4) présentent une forme extérieure générale cylindrique.

4. Grille de support selon la revendication 3, caractérisée en ce que, dans les zones de bord externes de la grille de support (9), sont soudées des pièces en croix (5) divisées en deux le long de l'axe dudit cylindre.

5. Grille du support selon la revendication 3 ou 4, caractérisée en ce que, dans les coins externes de la grille de support (9), sont soudées des pièces en croix (6) divisées en quatre le long de l'axe dudit cylindre.

Fig.1

Fig.7

Fig.6

# Fig.2

# Fig.3

# Fig.4

# Fig.5

0 197 884

# F i g.8

Fig.10

Fig.9